# EUROPEAN PATENT SPECIFICATION

(11) **EP 0 959 577 B1**
(45) Date of publication and mention of the grant of the patent: **05.09.2007**
(21) Application number: 98122681.4
(22) Date of filing: 30.11.1998
(51) Int. Cl.: H04B 10/17, H04B 10/18, H04J 14/02, H01S 3/10

(54) **Optical signal repeating and amplifying device and optical level adjusting device**
Vorrichtung zur Verstärkerung und Zwischenverstärkerung von optischen Signalen und vorrichtung zur Pegeleinstellung von optischen Signalen
Système d'amplification et de répéteur de signaux optiques et système d'ajustement de niveau optique

(30) Priority: 19.05.1998 JP 13723498; 19.05.1998 JP 13723598
(43) Date of publication of application: 24.11.1999
(60) Divisional application: 05027614.6
(73) Proprietor: NEC CORPORATION, Tokyo (JP)
(72) Inventor: Shimomura, Hirofumi, Minato-ku, Tokyo (JP); Henmi, Naoya, Minato-ku, Tokyo (JP)
(74) Representative: Baronetzky, Klaus

(56) References cited:
- EP-A- 0 617 527
- EP-A- 0 706 270
- EP-A- 0 772 264
- FR-A- 2 756 995
- US-A- 4 945 531
- US-A- 5 608 562
- US-A- 5 675 432
- PATENT ABSTRACTS OF JAPAN vol. 1996, no. 04, 30 April 1996 (1996-04-30) & JP 07 336298 A (NIPPON TELEGR & TELEPH CORP), 22 December 1995 (1995-12-22)
- HWANG S-M ET AL: "Passive equalisation of four 2.5 Gbit/s WDM channels over 1000 km using notch filters" ELECTRONICS LETTERS, IEE STEVENAGE, GB, vol. 32, no. 7, 28 March 1996 (1996-03-28), pages 676-677, XP006004918 ISSN: 0013-5194
- MURAKAMI M ET AL: "Transoceanic twelve 10 Gbit/s WDM signal transmission experiment with individual channel dispersion-and-gain compensation and prechirped RZ pulse format" ELECTRONICS LETTERS, IEE STEVENAGE, GB, vol. 33, no. 25, 4 December 1997 (1997-12-04), pages 2145-2146, XP006008255 ISSN: 0013-5194
- "DYNAMIC GAIN EQUALIZATION SCHEME FOR MAN/WAN USING WDMA AND SEMICONDUCTOR OPTICAL AMPLIFIERS" IBM TECHNICAL DISCLOSURE BULLETIN, IBM CORP. NEW YORK, US, vol. 37, no. 4B, 1 April 1994 (1994-04-01), pages 9-11, XP000451152 ISSN: 0018-8689

## Description

### FIELD OF THE INVENTION

This invention relates to an optical signal repeating and amplifying device and an optical level adjusting device which are applied to the optical WDM transmission.

### BACKGROUND OF THE INVENTION

The optical WDM transmission system that optical signals with different wavelengths are transmitted in the lump through one optical fiber allows a large-capacity optical transmission. In particular, owing to the development of high-gain and high-power optical amplifiers, such as an erbium-doped optical fiber amplifier, a long-distance and large-capacity optical transmission can be realized. In repeating optical signals in the optical transmission, to amplify the optical signals unalteredly without converting into electrical signals can contribute effectively to the miniaturization of repeating station, thereby reducing the cost of transmission. At present, to realize a further long-distance optical transmission by using a multiple-stage optical repeating and amplifying has been expected.

However, conventional optical signal repeating and amplifying device and optical level adjusting device have some problems described below.

First, due to the limitation on output power of optical amplifier, the optical power per one wave is limited when the number of optical signals multiplexed is increased. Thereby the transmission distance is also limited to be short.

Second, with an increase in the number of repeating amplifiers, the difference in optical level between wavelengths due to the gain deviation of optical amplifier is increased and an ASE noise generated from optical amplifier is also increased. Thereby the reception sensitivity must be reduced. Further, in connecting multiple-stage optical amplifiers, the optical level may be greatly different between wavelengths because optical amplifiers have different gains depending on wavelength.

In "Transoceanic twelve 10 Gbit/s WDM signal transmission experiment with individual channel dispersion-and-gain compensation and prechirped RZ pulse format" (Murakami M. et al, Electronic letters, IEE Stevenage, GB, vol. 33, no. 25, December 4, 1997, pages 2145-2146, XP006008255 ISSN: 0013-5194) describes an experimental setup is described for examining the realization of a 10 Gbit/s optical transmission over 6240 km. By demultiplexing the optical signals, a specific attenuation of each demultiplexed signal and then multiplexing the signal again the transmission of 12 channels of 10 Gbit/s could be proved.

The EP-A-0 617 527 describes a system comprised of different optical amplifiers within an optical transmission line. A number of optical amplifiers amplify all wavelengths together, and after a specific distance the signals are demultiplexed, each signal is separately amplified and then the signals are multiplexed again. Thus, different signal dispersion of the fibers and gain factors of the amplifiers are to be compensated with the disadvantage of a huge equipment effort. Additionally, if the specific gain factors of the optical amplifiers in funtion of the wavelength differ in a too great extent a compensation of gain deviation may become impossible.

### SUMMARY OF THE INVENTION

Accordingly, it is an object of the invention to provide an optical signal repeating and amplifying device that the reception sensitivity can be enhanced by removing an ASE noise, the total optical intensity of optical signals to be output after wavelength-multiplexing can be increased, and the level of wavelength lights in WDM optical signal can be equalized.

It is a further object of the invention to provide an optical level adjusting device that the optical level of each wavelength can be adjusted into an arbitrary value.

According to the invention, an optical signal repeating and amplifying device, comprises:
an optical amplifier which amplifies an optical signal to be input thereto and then outputs it; and
an optical filter means through which only one wavelength light of the optical signal to be output from the optical amplifier is passed.

According to another aspect of the invention - for explanatory reasons -, an optical signal repeating and amplifying device, comprises:
a first optical demultiplexer-multiplexer which demultiplexes a wavelength-multiplexed optical signal into a plurality of wavelength lights;
a plurality of optical transmission lines through which the plurality of wavelength lights from the first optical demultiplexer-multiplexer are separately transmitted; and
a second optical demultiplexer-multiplexer which multiplexes the optical signals transmitted through the plurality of optical transmission lines into a wavelength-multiplexed optical signal and outputs it.

According to another aspect of the invention - for explanatory reasons -, an optical signal repeating and amplifying device, comprises:
an optical circulator through which a wavelength-multiplexed optical signal to be input to the input port is output from the input-output port and a wavelength-multiplexed optical signal to be input to the input-output port is output from the output port;
an optical demultiplexer-multiplexer which demultiplexes the wavelength-multiplexed optical signal from the optical circulator into a plurality of wavelength lights and multiplexes a plurality of wavelength lights into a wavelength-multiplexed optical signal;
a plurality of optical transmission lines through which the demultiplexed plurality of wavelength lights to be output from the optical demultiplexer-multiplexer are separately transmitted; and
a plurality of optical reflecting mirrors which reflect separately the demultiplexed plurality of wavelength lights transmitted through the plurality of optical transmission lines to turn them back.

According to another aspect of the invention, an optical signal repeating and amplifying device, comprises:
an optical demultiplexer-multiplexer which demultiplexes a wavelength-multiplexed optical signal into a plurality of wavelength lights and multiplexes a plurality of wavelength lights into a wavelength-multiplexed optical signal;
a plurality of optical transmission lines through which the demultiplexed plurality of wavelength lights to be output from the optical demultiplexer-multiplexer are separately transmitted; and
an optical dividing and coupling means through which each of the plurality of wavelength lights transmitted through each of the plurality of optical transmission lines is re-input to the optical demultiplexer-multiplexer while by-passing a different one of the optical transmission lines without overlapping with another wavelength light.

According to another aspect of the invention - for explanatory reasons -, an optical signal repeating and amplifying device, comprises:
a first optical demultiplexer-multiplexer which demultiplexes a wavelength-multiplexed optical signal into a plurality of wavelength lights;
a plurality of optical filters through which the plurality of wavelength lights from the first optical demultiplexer-multiplexer are separately passed; and
a second optical demultiplexer-multiplexer which multiplexes the optical signals passed through the plurality of optical filters into a wavelength-multiplexed optical signal and outputs it.

According to another aspect of the invention - for explanatory reasons -, an optical signal repeating and amplifying device, comprises:
an optical divider which divides a wavelength-multiplexed optical signal into a plurality of lights;
a plurality of optical filters through which the plurality of wavelength lights from the optical divider are separately passed; and
an optical coupler which couples the optical signals passed through the plurality of optical filters into a wavelength-multiplexed optical signal and outputs it.

According to another aspect of the invention - for explanatory reasons -, an optical signal repeating and amplifying device, comprises:
an optical circulator through which a wavelength-multiplexed optical signal to be input to the input port is output from the input-output port and a wavelength-multiplexed optical signal to be input to the input-output port is output from the output port;
an optical demultiplexer-multiplexer which demultiplexes the wavelength-multiplexed optical signal from the optical circulator into a plurality of wavelength lights and multiplexes a plurality of wavelength lights into a wavelength-multiplexed optical signal;
a plurality of optical filters through which the demultiplexed plurality of wavelength lights to be output from the optical demultiplexer-multiplexer are separately passed; and
a plurality of optical reflecting mirrors which reflect separately the demultiplexed plurality of wavelength lights passed through the plurality of optical filters to turn them back.

According to another aspect of the invention - for explanatory reasons -, an optical signal repeating and amplifying device, comprises:
an optical circulator through which a wavelength-multiplexed optical signal to be input to the input port is output from the input-output port and a wavelength-multiplexed optical signal to be input to the input-output port is output from the output port;
an optical divider-coupler which divides the wavelength-multiplexed optical signal from the optical circulator into a plurality of lights and couples a plurality of lights into a wavelength-multiplexed optical signal;
a plurality of optical filters through which the divided plurality of lights to be output from the optical divider-coupler are separately passed; and
a plurality of optical reflecting mirrors which reflect separately the divided plurality of lights passed through the plurality of optical filters to turn them back.

According to another aspect of the invention - for explanatory reasons -, an optical signal repeating and amplifying device, comprises:
an optical divider-coupler which divides the wavelength-multiplexed optical signal from the optical circulator into a plurality of lights and couples a plurality of lights into a wavelength-multiplexed optical signal;
a plurality of optical transmission lines which the divided plurality of lights to be output from the optical divider-coupler are separately transmitted;
a plurality of optical filters through which the divided plurality of lights from the plurality of optical transmission lines are separately passed; and
an optical dividing and coupling means through which each of the plurality of lights passed through each of the plurality of optical filters is re-input to the optical divider-coupler while by-passing a different one of the optical transmission lines without overlapping with another light.

According to another aspect of the invention - for explanatory reasons -, an optical level adjusting device, comprises:
an optical demultiplexer which demultiplexes a wavelength-multiplexed optical signal into a plurality of wavelength lights;
a plurality of optical attenuators which attenuate separately the demultiplexed plurality of wavelength lights to be output from the optical demultiplexer; and
an optical multiplexer which multiplexes the attenuated wavelength lights to be output from the plurality of optical attenuators into a wavelength-multiplexed optical signal and output it.

According to another aspect of the invention - for explanatory reasons -, an optical level adjusting device, comprises:
an optical circulator through which a wavelength-multiplexed optical signal to be input to the input port is output from the input-output port and a wavelength-multiplexed optical signal to be input to the input-output port is output from the output port;
an optical demultiplexer-multiplexer which demultiplexes the wavelength-multiplexed optical signal from the optical circulator into a plurality of wavelength lights and multiplexes a plurality of wavelength lights into a wavelength-multiplexed optical signal;
a plurality of optical attenuators which attenuate separately the demultiplexed plurality of wavelength lights to be output from the optical demultiplexer-multiplexer; and
a plurality of optical reflecting mirrors which reflect separately the attenuated plurality of wavelength lights passed through the plurality of optical attenuators to turn them back through the plurality of optical attenuators to the optical demultiplexer-multiplexer.

According to another aspect of the invention, an optical level adjusting device, comprises:
an optical demultiplexer-multiplexer which demultiplexes a wavelength-multiplexed optical signal into a plurality of wavelength lights and multiplexes a plurality of wavelength lights into a wavelength-multiplexed optical signal;
a plurality of optical transmission lines through which the demultiplexed plurality of wavelength lights to be output from the optical demultiplexer-multiplexer are separately transmitted;
an optical dividing and coupling means through which each of the plurality of wavelength lights transmitted through each of the plurality of optical transmission lines is re-input to the optical demultiplexer-multiplexer while by-passing a different one of the optical transmission lines without overlapping with another wavelength light; and
a plurality of optical attenuators which are disposed between any two of the optical transmission lines to attenuate separately the demultiplexed plurality of wavelength lights to be transmitted therebetween.

According to another aspect of the invention - for explanatory reasons -, an optical signal repeating and amplifying device, comprises:
a first optical demultiplexer-multiplexer which demultiplexes a wavelength-multiplexed optical signal to be input thereto into a plurality of different wavelength lights;
a plurality of optical amplifiers which amplify separately the demultiplexed plurality of different wavelength lights; and
a second optical demultiplexer-multiplexer which multiplexes the amplified wavelength lights to be output from the plurality of optical amplifiers into a wavelength-multiplexed optical signal.

According to another aspect of the invention - for explanatory reasons -, an optical signal repeating and amplifying device, comprises:
an optical circulator through which a wavelength-multiplexed optical signal to be input to the input port is output from the input-output port and a wavelength-multiplexed optical signal to be input to the input-output port is output from the output port;
an optical demultiplexer-multiplexer which demultiplexes the wavelength-multiplexed optical signal from the optical circulator into a plurality of wavelength lights and multiplexes a plurality of wavelength lights into a wavelength-multiplexed optical signal;
a plurality of optical amplifiers which amplify separately the demultiplexed plurality of different wavelength lights to be output from the optical demultiplexer-multiplexer; and
a plurality of optical reflecting mirrors which reflect separately the plurality of wavelength lights to be output from the plurality of optical amplifiers to turn them back through the plurality of optical amplifiers to the optical demultiplexer-multiplexer.

According to another aspect of the invention, an optical signal repeating and amplifying device, comprises:
an optical demultiplexer-multiplexer which demultiplexes the wavelength-multiplexed optical signal to be input thereto into a plurality of wavelength lights and multiplexes a plurality of wavelength lights into a wavelength-multiplexed optical signal;
a plurality of first optical transmission lines which are connected with the input-output ports on the demultiplex side of the optical demultiplexer-multiplexer;
a plurality of optical divider-couplers which are connected to the ends of the plurality of first optical transmission lines;
a plurality of second optical transmission lines which connect between different two of the plurality of optical divider-couplers, the connecting not to be in parallel to another connecting; and
a plurality of bi-directional optical amplifiers which are inserted into the plurality of second optical transmission lines and amplify an optical signal to transmit therethrough.

According to another aspect of the invention - for explanatory reasons -, an optical level adjusting device, comprises:
a first optical demultiplexer-multiplexer which demultiplexes a wavelength-multiplexed optical signal to be input thereto into a plurality of different wavelength lights;
a plurality of optical amplifiers which amplify separately the demultiplexed plurality of different wavelength lights; and
a second optical demultiplexer-multiplexer which multiplexes the amplified wavelength lights to be output from the plurality of optical amplifiers into a wavelength-multiplexed optical signal; and
means for controlling separately the gain of the plurality of optical amplifiers.

According to another aspect of the invention - for explanatory reasons -, an optical level adjusting device, comprises:
an optical circulator through which a wavelength-multiplexed optical signal to be input to the input port is output from the input-output port and a wavelength-multiplexed optical signal to be input to the input-output port is output from the output port;
an optical demultiplexer-multiplexer which demultiplexes the wavelength-multiplexed optical signal from the optical circulator into a plurality of wavelength lights and multiplexes a plurality of wavelength lights into a wavelength-multiplexed optical signal;
a plurality of bi-directional optical amplifiers which amplify separately the demultiplexed plurality of different wavelength lights to be output from the optical demultiplexer-multiplexer;
a plurality of optical reflecting mirrors which reflect separately the plurality of wavelength lights to be output from the plurality of optical amplifiers to turn them back through the plurality of optical amplifiers to the optical demultiplexer-multiplexer;
means for controlling separately either the gain of the plurality of optical amplifiers or the reflectivity of the plurality of optical reflecting mirrors.

According to another aspect of the invention, an optical level adjusting device, comprises:
an optical demultiplexer-multiplexer which demultiplexes the wavelength-multiplexed optical signal to be input thereto into a plurality of wavelength lights and multiplexes a plurality of wavelength lights into a wavelength-multiplexed optical signal;
a plurality of first optical transmission lines which are connected with the input-output ports on the demultiplex side of the optical demultiplexer-multiplexer;
a plurality of optical divider-couplers which are connected to the ends of the plurality of first optical transmission lines;
a plurality of second optical transmission lines which connect between different two of the plurality of optical divider-couplers, the connecting not to be in parallel to another connecting;
a plurality of bi-directional optical amplifiers which are inserted into the plurality of second optical transmission lines and amplify an optical signal to transmit therethrough; and
means for controlling separately the gain of the plurality of bi-directional optical amplifiers.

### BRIEF DESCRIPTION OF THE DRAWINGS

The invention will be explained in more detail in conjunction with the appended drawings, wherein:
FIG.25 is a block diagram showing an optical level adjusting device in a third preferred embodiment according to the invention,
FIG.28 is a block diagram showing an optical signal repeating and amplifying device in a twenty-third preferred embodiment according to the invention,
FIG.31 is a block diagram showing an optical signal repeating and amplifying device in a twenty-sixth preferred embodiment according to the invention,

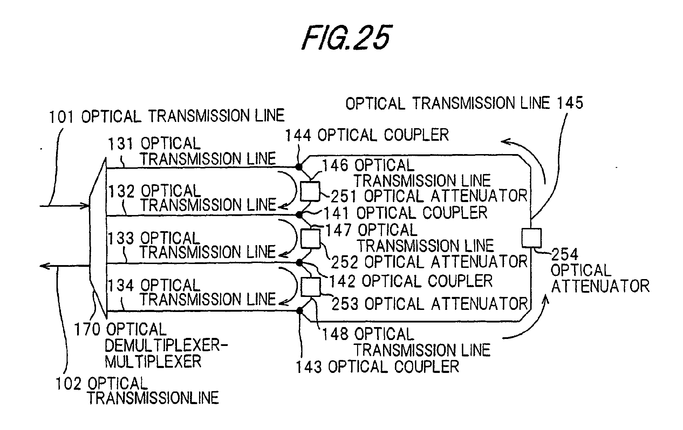

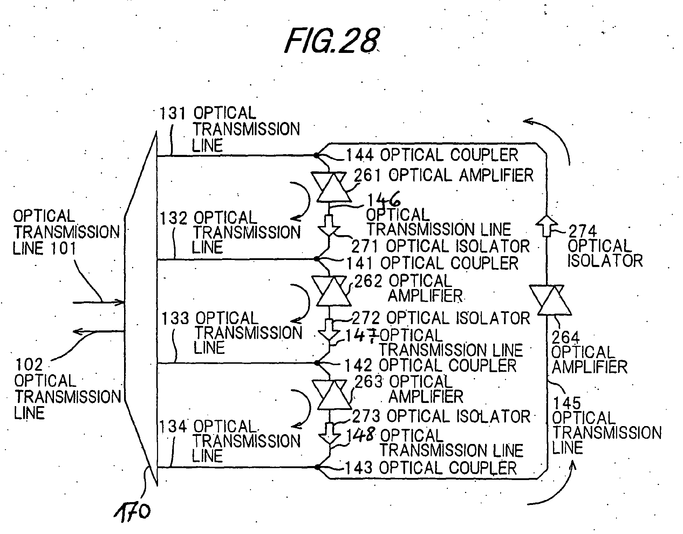

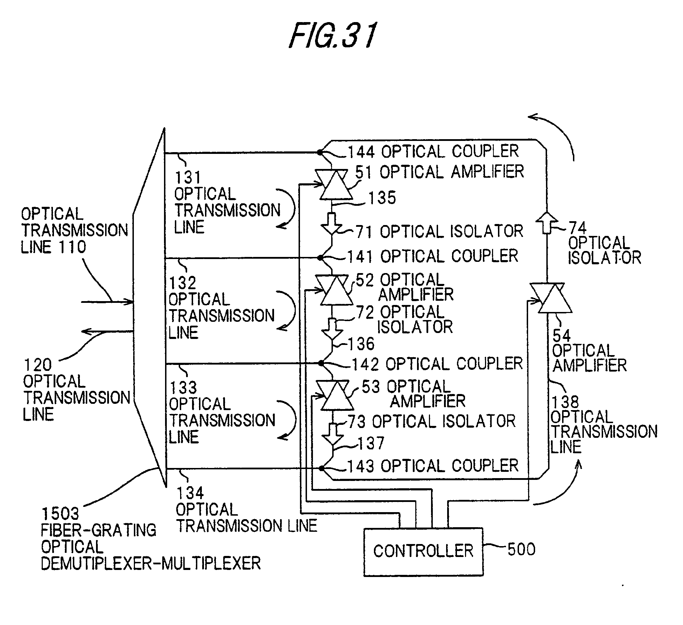

### DESCRIPTION OF THE PREFERRED EMBODIMENTS

An optical level adjusting device in the first preferred embodiment will be explained in FIG. 25.

The optical transmission line 101 is connected to the optical demultiplexer-multiplexer 170, and the optical transmission lines 131, 132, 133 and 134 are connected to the four output ports of the optical demultiplexer-multiplexer 170. The optical couplers 144, 141, 142 and 143 are connected to the ends of the optical transmission lines 131 to 134, respectively. Further, the optical transmission line 145 is connected between the optical couplers 143 and 144, the optical transmission line 146 is connected between the optical couplers 144 and 141, the optical transmission line 147 is connected between the optical couplers 141 and 142, and the optical transmission line 148 is connected between the optical couplers 142 and 143. Also, the optical attenuator 251 is inserted between the optical couplers 141 and 144, the optical attenuator 252 is inserted between the optical couplers 141 and 142, the optical attenuator 253 is inserted between the optical couplers 142 and 143, and the optical attenuator 254 is inserted between the optical couplers 143 and 144.

In operation, an optical signal transmitted through the optical transmission line 101 is demultiplexed into four optical signals with the above wavelengths (λ1 to λ4) by the optical demultiplexer-multiplexer 170. The optical demultiplexer 170 removes an ASE noise included in the optical signals and an optical signal with a wavelength other than the above four wavelengths (λ1 to λ4). Then, the respective optical signals demultiplexed by the optical demultiplexer-multiplexer 170 are separately transmitted through the optical transmission lines 131 to 134, attenuated by the optical attenuators 251 to 254. For example, the optical signal with 1548nm wavelength transmitted through the optical transmission line 131 is attenuated by the optical attenuator 251, passed through the optical coupler 141 to the optical transmission line 132, input through the optical transmission line 132 to the optical demultiplexer-multiplexer 170. In like manner, the other optical signals transmitted through the optical transmission lines 132 to 134 are also input to the optical demultiplexer-multiplexer 170. Then, the optical signals are multiplexed into a wavelength-multiplexed optical signal by the optical demultiplexer-multiplexer 170, output to the optical transmission line 102.

In the optical level adjusting device in FIG.25, the optical level of the respective wavelength lights in the wavelength-multiplexed optical signal can be adjusted into an arbitrary level by the optical attenuators 251 to 254.

An optical signal repeating and amplifying device in the second preferred embodiment will be explained in FIG.28, wherein like parts are indicated by like reference numerals as used in FIG. 25.

The optical demultiplexer-multiplexer 170 is connected with the optical transmission lines 101, 102. The optical transmission lines 131 to 134 are connected to the wavelength-demultiplexing side of the optical demultiplexer-multiplexer 170. The optical couplers 144, 141, 142 and 143 are connected to the ends of the optical transmission lines 131 to 134, respectively. Further, the optical amplifier 261 and an optical isolator 271 that are in series connected are inserted between the optical couplers 141 and 144, the optical amplifier 262 and an optical isolator 272 that are in series connected are inserted between the optical couplers 141 and 142, the optical amplifier 263 and an optical isolator 273 that are in series connected are inserted between the optical couplers 142 and 143, and the optical amplifier 264 and an optical isolator 274 that are in series connected are inserted between the optical couplers 143 and 144.

In operation, an optical signal supplied through the optical transmission line 101 is demultiplexed into optical signals with four wavelengths (λ1 to λ4) by the optical demultiplexer-multiplexer 170, output separately to the optical transmission lines 131 to 134. Then, for example, the optical signal with 1548nm wavelength to be output to the optical transmission line 131 is passed through the optical coupler 144, amplified by the optical amplifier 261, passed through the optical isolator 271 and the optical coupler 141, input through the optical transmission line 132 to the optical demultiplexer-multiplexer 170. The optical demultiplexer-multiplexer 170 removes an ASE noise from the optical amplifier 261 and an optical signal with a wavelength other than the above four wavelengths (λ1 to λ4). In like manner, the other optical signals to be transmitted through the optical transmission lines 132 to 134 are also input to the optical demultiplexer-multiplexer 170.

In the optical signal repeating and amplifying device in FIG.28, the noise component of the wavelength-multiplexed optical signal to be output becomes very small. Therefore, the amount of a reduction in reception sensitivity after the transmission can be significantly improved.

In the optical signal repeating and amplifying devices shown in FIG 28, the optical amplifiers 261 to 264 are inserted into the optical transmission lines 131 to 134, respectively, that are connected to the optical demultiplexer 120 or optical demultiplexer-multiplexer 170. Therefore, by adjusting the gain of the optical amplifiers 261 to 264, the optical signal repeating and amplifying devices can serve as an optical level adjusting device. Further, they can serve as both an optical signal repeating and amplifying device and an optical level adjusting device.

An optical signal repeating and amplifying device in the third preferred embodiment will be explained in FIG.31.

In the third embodiment, as compared with the second embodiment, the optical demultiplexer-multiplexer 170 in FIG.28 is replaced by the fiber-grating type optical demultiplexer-multiplexer 1503 and a controller 500 is provided to control the gain of the optical amplifiers 51 to 54. Meanwhile, optical transmission lines 110, 120 and 138 correspond to the optical transmission lines 101, 102 and 145 respectively, in FIG.28, optical isolators 71 to 74 to the optical isolators 271 to 274 in FIG.28; and the optical amplifiers 51 to 54 to the optical amplifiers 261 to 264 in FIG. 28.

The fiber-grating type optical demultiplexer-multiplexer 1503 removes an ASE noise from a previous-stage optical amplifier and an optical signal with a wavelength other than the above four wavelengths (λ1 to λ4) when it demultiplexes a wavelength-multiplexed optical signal supplied through the optical transmission line 110 into optical signals. Then, for example, the optical signal passing through the optical transmission line 131 is again input through the optical coupler (optical divider in the narrow sense) 144, optical amplifier 51, optical isolator 71, optical coupler(optical divider in the narrow sense) 141 and optical transmission line 132 to the fiber-grating type optical demultiplexer-multiplexer 1503. The fiber-grating type optical demultiplexer-multiplexer 1503 removes an ASE noise from the optical amplifiers 51 to 54 and an optical signal with a wavelength other than the above four wavelengths (λ1 to λ4). In like manner, the other optical signals passing through the optical transmission lines 132 to 134 are also re-input to the fiber-grating type optical demultiplexer-multiplexer 1503. Then, the fiber-grating type optical demultiplexer-multiplexer 1503 multiplexes the optical signals from the optical transmission lines 131 to 134 into a wavelength-multiplexed optical signal, outputting it to the optical transmission line 120.

In the optical signal repeating and amplifying device in FIG. 31, the noise component of the wavelength-multiplexed optical signal to be output becomes very small. Therefore, the amount of a reduction in reception sensitivity after the transmission can be significantly improved. Further, by using the controller 500, the optical level of the respective wavelength lights in the wavelength-multiplexed optical signal to be output can be adjusted into an arbitrary level.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching here is set forth.

## Claims

1. An optical level adjusting device, comprising:
an optical demultiplexer-multiplexer (170) which demultiplexes a wavelength-multiplexed optical signal into a plurality of wavelength lights and multiplexes a plurality of wavelength lights into a wavelength-multiplexed optical signal;
a plurality of first optical transmission lines (131, 132, 133, 134) which are connected with the input-output ports on the demultiplex side of said optical demultiplexer-multiplexer (170);
a plurality of optical divider-couplers (141, 142, 143, 144) which are connected to the ends of said plurality of first optical transmission lines;
a plurality of second optical transmission lines (145, 146, 147, 148) which connect between different two of said plurality of optical divider-couplers, the connecting not to be in parallel to another connecting; and
a plurality of optical attenuators (251, 252, 253, 254) which are inserted into said plurality of second optical transmission lines and attenuate separately an optical signal to transmit therethrough.

2. An optical level adjusting device, according to claim 1, wherein:
said optical demultiplexer-multiplexer (170) is of array waveguide diffraction grating type or fiber-grating type.

3. An optical level adjusting device, according to claim 1, wherein:
said optical attenuators (251, 252, 253, 254) are an optical variable attenuator or an optical fixed attenuator.

4. An optical level adjusting device, according to claim 1 , wherein:
said optical attenuators (251, 252, 253, 254) are replaced by optical amplifiers.

5. An optical signal repeating, amplifying and level adjusting device, comprising:
an optical demultiplexer-multiplexer (170) which demultiplexes the wavelength-multiplexed optical signal to be input thereto into a plurality of wavelength lights and multiplexes a plurality of wavelength lights into a wavelength-multiplexed optical signal;
a plurality of first optical transmission lines (131, 132, 133, 134) which are connected with the input-output ports on the demultiplex side of said optical demultiplexer-multiplexer (170);
a plurality of optical divider-couplers (141, 142, 143, 144) which are connected to the ends of said plurality of first optical transmission lines;
a plurality of second optical transmission lines (145, 146, 147, 148) which connect between different two of said plurality of optical divider-couplers, the connecting not to be in parallel to another connecting; and
a plurality of bi-directional optical amplifiers (261, 262, 263, 264) which are inserted into said plurality of second optical transmission lines and amplify an optical signal to transmit therethrough.

6. The optical signal repeating, amplifying and level adjusting device according to claim 5, further comprising:
means for controlling separately the gain of said plurality of bi-directional optical amplifiers (261, 262, 263, 264).

7. The optical signal repeating, amplifying and level adjusting device, according to claim 6, wherein:
said plurality of second optical transmission lines are separately provided with an optical isolator (271, 272, 273, 274).

8. The optical signal repeating, amplifying and level adjusting device, according to claim 6, wherein:
said plurality of optical amplifiers (261, 262, 263, 264) are a semiconductor optical amplifier or an impurity-doped optical fiber amplifier.

9. The optical signal repeating, amplifying and level adjusting device, according to claim 8, wherein:
said impurity-doped optical fiber amplifier is a rare-earth-element-doped optical fiber amplifier.

10. The optical signal repeating, amplifying and level adjusting device, according to claim 9, wherein:
said rare-earth-element-doped optical fiber amplifier is an erbium-doped optical fiber amplifier, a neodymium-doped optical fiber amplifier, or a praseodymium-doped optical fiber amplifier.

11. The optical signal repeating, amplifying and level adjusting device, according to claim 7, wherein:
said optical demultiplexer-multiplexer (170) is of array waveguide diffraction grating type.

12. The optical signal repeating, amplifying and level adjusting device, according to claim 7, wherein:
said optical demultiplexer-multiplexer (170) is of fiber-grating type.

13. The optical signal repeating, amplifying and level adjusting device, according to claim 6, wherein:
said optical amplifiers (261, 262, 263, 264) are replaced by optical attenuators or include optical attenuators to be in series connected thereto.

## Patentansprüche

1. Optische Pegelanpassungsvorrichtung, welche Folgendes aufweist:
einen optischen Demultiplexer-Multiplexer (170), der ein wellenlängengemultiplextes optisches Signal in eine Vielzahl von Wellenlängenlichtern demultiplext, und eine Vielzahl von Wellenlängenlichtern in ein wellenlängengemultiplextes optisches Signal multiplext;
eine Vielzahl von ersten optischen Übertragungsleitungen (131, 132, 133, 134), die mit den Eingangs/Ausgangs-Ports auf der Demultiplexerseite das optischen Demultiplexer-Multiplexers (170) verbunden sind;
eine Vielzahl von optischen Trennkopplern (141, 142, 143, 144), die mit den Enden der Vielzahl von ersten optischen Übertragungsleitungen verbunden sind;
eine Vielzahl von zweiten optischen Übertragungsleitungen (145, 146, 147, 148), die eine Verbindung zwischen zwei verschiedenen aus der Vielzahl von optischen Trennkopplern herstellen, wobei die Verbindung nicht parallel zu einer weiteren Verbindung sein soll; und
eine Vielzahl von optischen Abschwächern (251, 252, 253, 254), die in die Vielzahl von zweiten optischen Übertragungsleitungen eingefügt werden und ein optisches Signal separat abschwächen, um durch diese zu übertragen.

2. Optische Pegelanpassungsvorrichtung nach Anspruch 1, **dadurch gekennzeichnet, dass**:
der optische Demultiplexer-Multiplexer (170) von der Art eines Array Waveguide Diffraction Grating bzw. Anordnungswellenleiter-Beugungsgitters oder Fiber Grating bzw. Fasergitters ist.

3. Optische Pegelanpassungsvorrichtung nach Anspruch 1, **dadurch gekennzeichnet, dass**:
die optischen Abschwächer (251, 252, 253, 254) ein optischer variabler Abschwächer oder ein optischer festgesetzter Abschwächer ist.

4. Optische Pegelanpassungsvorrichtung nach Anspruch 1, **dadurch gekennzeichnet, dass**:
die optischen Abschwächer (251, 252, 253, 254) durch optische Verstärker ersetzt werden.

5. Optische Signalregenerierungs-, Signalverstärkungs- und Pegelanpassungsvorrichtung, welche Folgendes aufweist:
einen optischen Demultiplexer-Multiplexer (170), welcher das darin einzugebende wellenlängengemultiplexte optische Signal in eine Vielzahl von Wellenlängenlichtern demultiplext, und eine Vielzahl von Wellenlängenlichtern in ein wellenlängengemultiplextes optisches Signal multiplext;
eine Vielzahl von ersten optischen Übertragungsleitungen (131, 132, 133, 134), die mit den Eingangs/Ausgangs-Ports auf der Demultiplexerseite des optischen Demultiplexer-Multiplexers (170) verbunden sind;
eine Vielzahl von optischen Trennkopplern (141, 142, 143, 144), die mit den Enden der Vielzahl von ersten optischen Übertragungsleitungen verbunden sind;
eine Vielzahl von zweiten optischen Übertragungsleitungen (145, 146, 147, 148), die eine Verbindung zwischen zwei verschiedenen aus der Vielzahl von optischen Trennkopplern herstellen, wobei die Verbindung nicht parallel zu einer weiteren Verbindung sein soll; und
eine Vielzahl von bidirektionalen optischen Verstärkern (261, 262, 263, 264), die in die Vielzahl zweiter optischer Übertragungsleitungen eingefügt werden und ein optisches Signal verstärken, um durch diese zu übertragen.

6. Optische Signalregenerierungs-, Signalverstärkungs- und Pegelanpassungsvorrichtung nach Anspruch 5, welche des Weiteren Folgendes aufweist:
Vorrichtungen zur separaten Steuerung der Verstärkung der Vielzahl von bidirektionalen optischen Verstärkern (261, 262, 263, 264) .

7. Optische Signalregenerierungs-, Signalverstärkungs- und Pegelanpassungsvorrichtung nach Anspruch 6, **dadurch gekennzeichnet, dass**:
die Vielzahl von zweiten optischen Übertragungsleitungen separat mit einem optischen Isolator (271, 272, 273, 274) ausgestattet sind.

8. Optische Signalregenerierungs-, Signalverstärkungs- und Pegelanpassungsvorrichtung nach Anspruch 6, **dadurch gekennzeichnet, dass**:
die Vielzahl von optischen Verstärkern (261, 262, 263, 264) ein optischer Halbleiterverstärker oder ein Impurity Doped Fiber bzw. unreinheitendotierter optischer Faserverstärker ist.

9. Optische Signalregenerierungs-, Signalverstärkungs- und Pegelanpassungsvorrichtung nach Anspruch 8, **dadurch gekennzeichnet, dass**:
der Impurity Doped Fiber bzw. unreinheitendotierte optische Faserverstärker ein mit Seltenerdmetallen dotierter optischer Faserverstärker ist.

10. Optische Signalregenerierungs-, Signalverstärkungs- und Pegelanpassungsvorrichtung nach Anspruch 9, **dadurch gekennzeichnet, dass**:
der mit Seltenerdmetallen dotierte optische Faserverstärker ein erbidumdotierter optischer Faserverstärker, ein neodymdotierter optischer Faserverstärker oder ein praseodymdotierter optischer Faserverstärker ist.

11. Optische Signalregenerierungs-, Signalverstärkungs- und Pegelanpassungsvorrichtung nach Anspruch 7, **dadurch gekennzeichnet, dass**:
der optische Demultiplexer-Multiplexer (170) von der Art eines Array Waveguide Diffraction Grating bzw. Anordnungswellenleiter-Beugungsgitters ist.

12. Optische Signalregenerierungs-, Signalverstärkungs- und Pegelanpassungsvorrichtung nach Anspruch 7, **dadurch gekennzeichnet, dass**:
der optische Demultiplexer-Multiplexer (170) von der Art eines Fibre Grating bzw. Fasergitters ist.

13. Optische Signalregenerierungs-, Signalverstärkungs- und Pegelanpassungsvorrichtung nach Anspruch 7, **dadurch gekennzeichnet, dass**:
die optischen Verstärker (261, 262, 263, 264) durch optische Abschwächer ersetzt werden oder Abschwächer aufweisen, die mit ihnen in Reihe geschaltet werden sollen.

## Revendications

1. Un dispositif de réglage de niveau optique, qui présente :
un démultiplexeur-multiplexeur optique (170) qui démultiplexe un signal optique par multiplexage en longueur d'onde dans une pluralité de lumières de longueur d'onde et multiplexe une pluralité de lumières de longueur d'onde dans un signal optique par multiplexage en longueur d'onde ;
une pluralité de premières lignes de transmission optiques (131, 132, 133, 134) qui sont reliées aux ports d'entrée-sortie du côté du démultiplexage dudit démultiplexeur-multiplexeur optique (170) ;
une pluralité de diviseurs-coupleurs optiques (141, 142, 143, 144) qui sont reliés aux extrémités de ladite pluralité de premières lignes de transmission optique ;
une pluralité de deuxièmes lignes de transmission optiques (145, 146, 147, 148) reliées entre deux diviseurs-coupleurs optiques différents parmi ladite pluralité de diviseurs-coupleurs optiques, la connexion n'étant pas en parallèle à une autre connexion ; et
une pluralité d'atténuateurs optiques (251, 252, 253, 254) qui sont insérés dans ladite pluralité de deuxièmes lignes de transmission optiques et atténue séparément un signal optique afin de transmettre par celui-ci.

2. Un dispositif de réglage de niveau optique, selon la revendication 1, où :
ledit démultiplexeur-multiplexeur optique (170) est ou de type arrangement de réseau de diffraction de guide d'ondes ou de type réseau de fibres.

3. Un dispositif de réglage de niveau optique, selon la revendication 1, où :
lesdits atténuateurs optiques (251, 252, 253, 254) sont ou un atténuateur variable optique ou un atténuateur fixe optique.

4. Un dispositif de réglage de niveau optique, selon la revendication 1, où :
lesdits atténuateurs optiques (251, 252, 253, 254) sont remplacés par des amplificateurs optiques.

5. Un dispositif de répétition, d'amplification et de réglage de niveau de signal optique, qui présente :
un démultiplexeur-multiplexeur optique (170) qui démultiplexe le signal optique par multiplexage en longueur d'onde qui doit y être entré dans une pluralité de lumières de longueur d'onde et multiplexe une pluralité de lumières de longueur d'onde dans un signal optique par multiplexage en longueur d'onde ;
une pluralité de premières lignes optiques de transmission (131, 132, 133, 134) qui sont reliées aux ports d'entrée-sortie du côté du démultiplexage dudit démultiplexeur-multiplexeur optique (170) ;
une pluralité de diviseurs-coupleurs optiques (141, 142, 143, 144) qui sont reliés aux extrémités de ladite pluralité de premières lignes de transmission optique ;
une pluralité de deuxièmes lignes de transmission optiques (145, 146, 147, 148) qui sont reliées entre deux différents de ladite pluralité de diviseurs-coupleurs optiques, la connexion ne devant pas être en parallèle à l'autre connexion ; et
une pluralité d'amplificateurs optiques bidirectionnels (261, 262, 263, 264) qui sont insérés dans ladite pluralité de deuxièmes lignes de transmission optique et amplifient un signal optique pour être transmis par celles-ci.

6. Le dispositif de répétition, d'amplification et de réglage de niveau de signal optique selon la revendication 5, qui présente en outre :
moyen pour commander séparément le gain de ladite pluralité d'amplificateurs optiques bidirectionnels (261, 262, 263, 264) .

7. Le dispositif de répétition, d'amplification et de réglage de niveau de signal optique, selon la revendication 6, où :
ladite pluralité de deuxièmes lignes de transmission optiques est pourvue séparément d'un isolant optique (271, 272, 273, 274).

8. Le dispositif de répétition, d'amplification et de réglage de niveau de signal optique, selon la revendication 6, où :
ladite pluralité d'amplificateurs optiques (261, 262, 263, 264) est un amplificateur optique de semi-conducteur ou un amplificateur de fibres optiques dopées par des impuretés.

9. Le dispositif de répétition, d'amplification et de réglage de niveau de signal optique, selon la revendication 8, où :
ledit amplificateur de fibres optiques dopées par des impuretés est un amplificateur de fibres optiques dopées par des éléments de terre rare.

10. Le dispositif de répétition, d'amplification et de réglage de niveau de signal optique, selon la revendication 9, où :
ledit amplificateur de fibre optique dopée par des éléments de terre rare est un amplificateur de fibre optique dopé par l'erbium, un amplificateur de fibre optique dopé par le néodyme, ou un amplificateur de fibre optique dopé par le praséodyme.

11. Le dispositif de répétition, d'amplification et de réglage de niveau de signal optique, selon la revendication 7, où :
ledit démultiplexeur-multiplexeur optique (170) est de type arrangement de réseau de diffraction de guide d'ondes.

12. Le dispositif de répétition, d'amplification et de réglage de niveau de signal optique, selon la revendication 7, où :
ledit démultiplexeur-multiplexeur optique (170) est de type réseau de fibres.

13. Le dispositif de répétition, d'amplification et de réglage de niveau de signal optique, selon la revendication 6, où :
lesdits amplificateurs optiques (261, 262, 263, 264) sont remplacés par des atténuateurs optiques ou incluent des atténuateurs optiques pour y être connecté en série.
